# FASCICULE DE BREVET EUROPEEN

(11) **EP 4 034 752 B1**
(45) Date de publication et mention de la délivrance du brevet: **05.06.2024**
(21) Numéro de dépôt: 20785816.8
(22) Date de dépôt: 21.09.2020
(51) Int. Cl.: F01D 5/02, F01D 5/10

(54) **ENSEMBLE POUR UNE TURBOMACHINE**
ANORDNUNG FÜR EINEN TURBINENMOTOR
ASSEMBLY FOR A TURBINE ENGINE

(30) Priorité: 23.09.2019 FR 1910480
(43) Date de publication de la demande: 03.08.2022
(73) Titulaire: SAFRAN AIRCRAFT ENGINES, 75015 Paris (FR)
(72) Inventeur: SULTANA, Patrick, Jean, Laurent, 77550 MOISSY-CRAMAYEL (FR); BLANCHARD, Stéphane, Pierre, Guillaume, 77550 MOISSY-CRAMAYEL (FR); DOS SANTOS, Antoine, Hervé, 77550 MOISSY-CRAMAYEL (FR)
(74) Mandataire: Ernest Gutmann - Yves Plasseraud S.A.S.
(86) Numéro de dépôt international: PCT/FR2020/051632
(87) Numéro de publication internationale: WO 2021/058898

(56) Documents cités:
- EP-A1- 3 524 776
- WO-A1-2013/153339
- FR-A1- 2 244 934
- US-A- 2 239 641
- US-A- 5 580 183

## Description

### Domaine technique de l'invention

L'invention concerne un ensemble pour une turbomachine, telle par exemple qu'un turboréacteur ou un turbopropulseur d'avion.

### Etat de la technique antérieure

Le document FR 3 066 552 au nom de la Demanderesse divulgue une turbomachine s'étendant autour d'un axe et comportant un arbre appelé arbre de compresseur basse pression, une soufflante comportant une zone de couplage radialement interne couplée en rotation audit arbre par l'intermédiaire de cannelures, et un rotor de compresseur basse pression comportant une zone de couplage radialement interne couplée en rotation audit arbre par l'intermédiaire de cannelures.

Chaque zone de couplage précitée comporte une partie cylindrique centrée sur une partie cylindrique de l'arbre. Par ailleurs, la zone de couplage du rotor de compresseur basse pression est maintenue en appui axial vers l'aval sur une butée de l'arbre. La zone de couplage de la soufflante est maintenue en appui axial vers l'aval sur l'extrémité amont de la zone de couplage du rotor de compresseur basse pression. Un écrou est vissé sur l'extrémité amont de l'arbre. Cet écrou vient exercer un effort axial sur l'extrémité amont de la zone de couplage de la soufflante. Ainsi, les deux zones de couplage sont maintenues axialement entre l'écrou et la butée de l'arbre.

Il s'avère qu'il est difficile d'assurer un centrage précis des zones de couplage par rapport à l'arbre de compresseur basse pression au travers des parties cylindriques de centrage. Ceci peut conduire à des balourds engendrant des phénomènes vibratoires néfastes en fonctionnement.

Afin d'améliorer un tel centrage, il peut être envisagé de fretter les parties cylindriques de centrage des zones de couplage et de l'arbre de compresseur basse pression. Un tel frettage est cependant difficile à réaliser dans la zone concernée, compte tenu notamment des difficultés d'accès pour les outils de frettage jusqu'aux parties concernées. Par ailleurs, le démontage des différents éléments frettés les uns aux autres est difficile à mettre en oeuvre, compte tenus des efforts ou des couples importants devant être mis en oeuvre pour séparer les parties frettées.

Un couplage de deux arbres de turbomachine selon l'art antérieur est aussi connu du document EP 3 524 776 A1.

L'invention vise à remédier à ces inconvénients de manière simple, fiable et peu onéreuse.

### Présentation de l'invention

A cet effet, selon la revendication 1, l'invention concerne un ensemble pour une turbomachine, comportant un arbre radialement interne et un arbre radialement externe, lesdits arbres étant coaxiaux et s'étendant selon un axe, des moyens de couplage en rotation des arbres interne et externe, des moyens de maintien axial de l'arbre interne par rapport à l'arbre externe, des moyens de centrage de l'arbre interne par rapport à l'arbre externe, caractérisé en ce que les moyens de centrage comportent une cale de centrage radial et de positionnement axial de forme tronconique, intercalée entre une surface de centrage tronconique de l'arbre interne et une surface de centrage tronconique complémentaire de l'arbre externe.

La forme tronconique des surfaces de centrage et de la cale permet de réaliser un centrage précis de l'arbre interne par rapport à l'arbre externe.

Il est possible d'adapter la cale et/ou les surfaces tronconiques correspondantes en fonction des dimensions et du positionnement axial et radial de l'arbre interne par rapport à l'arbre externe de façon à garantir, outre un bon centrage des deux arbres l'un par rapport à l'autre, leur bon positionnement axial l'un par rapport à l'autre. Une telle adaptation peut être obtenue par usinage des surfaces tronconiques des arbres et/ou de la cale, ou encore par un choix approprié des dimensions de la cale elle-même.

Une telle structure permet d'améliorer le comportement dynamique de l'ensemble en fonctionnement, de manière à réduire notamment les vibrations ainsi que les comportements dynamiques non voulus de type modes asynchrones.

Les surfaces tronconiques peuvent être évasées vers l'aval de la turbomachine. Les termes amont et aval sont définis par rapport au sens de circulation des flux de gaz au sein de la turbomachine.

La cale peut être montée au niveau d'une extrémité amont de l'arbre interne.

Les moyens de centrage peuvent comporter une surface de centrage cylindrique formée radialement à l'extérieur de l'arbre interne, la surface de centrage cylindrique coopérant avec une surface de centrage cylindrique complémentaire formée radialement à l'intérieur de l'arbre externe, lesdites surfaces de centrage cylindriques étant décalées axialement par rapport aux surfaces de centrage tronconiques.

La présence des surfaces de centrage cylindriques permet d'améliorer le centrage des arbres interne et externe l'un par rapport à l'autre.

Les surfaces de centrage cylindriques peuvent être décalées axialement vers l'aval par rapport aux surfaces de centrage tronconiques.

Les surfaces de centrage cylindriques peuvent être décalées axialement vers l'aval par rapport aux moyens de couplage en rotation desdits arbres.

La cale peut être annulaire.

La cale peut être pelable de sorte que certaines parties ou couches tronconiques peuvent être retirées de façon à faire varier les dimensions de la cale et permettre alors d'adapter les dimensions de cale aux dimensions nécessaires pour assurer un centrage et un positionnement axial précis des arbres interne et externe l'un par rapport à l'autre.

La cale peut comporter au moins une fente s'étendant principalement axialement.

La présence d'une fente autorise une déformation de la cale de façon à ce qu'elle se conforme à la forme réelle des surfaces tronconiques des arbres, dans le cas où la cale ou lesdites surfaces ne sont pas parfaitement tronconiques.

Le nombre de fentes peut être compris entre 1 et 20.

Chaque fente peut s'étendre sur une dimension axiale comprise entre 50 et 90 % de la dimension axiale de la cale.

Ladite fente peut comporter une première extrémité débouchant axialement au niveau d'une extrémité axiale de la cale et une seconde extrémité située axialement entre les extrémités axiales de la cale.

La seconde extrémité n'est ainsi pas débouchante.

La fente débouche par exemple au niveau de l'extrémité évasée de la cale, par exemple l'extrémité aval.

La seconde extrémité de la fente peut présenter un orifice circulaire ayant un diamètre supérieur à une dimension transversale de la fente.

En d'autres termes, la zone arrondie formée par l'orifice circulaire au niveau de la seconde extrémité de la fente est plus large que la fente, ce qui permet de mieux répartir les contraintes et éviter les effets de concentration de contraintes pouvant mener à des criques ou des départs de fissures au sein de la cale. Une telle zone arrondie est également appelée zone de décharge.

Les moyens de maintien axial peuvent comporter au moins un écrou vissé sur une partie filetée de l'arbre interne ou sur une partie filetée de l'arbre externe et venant axialement en appui sur une surface de butée axiale de l'arbre externe ou respectivement de l'arbre interne.

L'écrou est ainsi conçu pour empêcher le déplacement axial, dans une première direction axiale, par exemple de l'amont vers l'aval, de l'arbre interne par rapport à l'arbre externe. Le déplacement axial de l'arbre interne par rapport à l'arbre externe dans une seconde direction opposée, par exemple de l'aval vers l'amont, peut être empêchée par tous moyens appropriés. La partie filetée peut être formée sur une surface interne de l'arbre interne.

La surface d'appui peut être formée par une surface radiale annulaire de l'arbre externe. L'angle des surfaces tronconiques par rapport à l'axe peut être compris entre 1 et 45°.

Les moyens de couplage en rotation des arbres interne et externe peuvent comporter des cannelures.

L'invention concerne également une turbomachine selon la revendication 10, comportant, d'amont en aval par rapport au sens de circulation des gaz au sein de la turbomachine, une soufflante, un compresseur haute pression, un compresseur basse pression, une chambre de combustion, une turbine haute pression et une turbine basse pression, la turbine basse pression étant couplée en rotation à un premier arbre, la soufflante étant couplée en rotation à un second arbre, caractérisée en ce qu'elle comporte un ensemble du type précité, le premier arbre formant l'arbre interne, le second arbre formant l'arbre externe, ou inversement.

La soufflante peut être couplée au second arbre directement ou indirectement, par l'intermédiaire d'un réducteur de vitesse.

L'invention concerne également un aéronef comportant une turbomachine du type précité. Brève description des figures
[Fig. 1] est une demie vue schématique d'une turbomachine selon l'invention,
[Fig. 2] est une demie vue en coupe axiale d'une partie d'un ensemble selon une forme de réalisation de l'invention,
[Fig. 3] est une vue en perspective d'une cale selon une forme de réalisation de l'invention. Description détaillée de l'invention

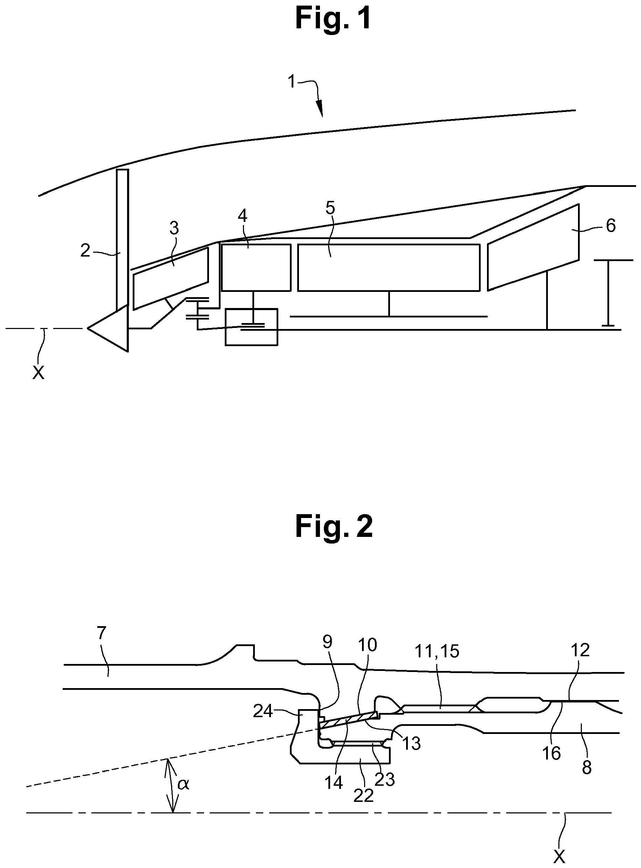

La figure 1 représente la structure générale d'une turbomachine 1 d'axe X. Celle-ci comporte, d'amont en aval dans le sens de circulation de l'air au sein de la turbomachine 1, une soufflante 2, un compresseur basse pression 3, un compresseur haute pression 4, une chambre de combustion non représentée, une turbine haute pression 5, et une turbine basse pression 6. Le compresseur haute pression 4 et la turbine haute pression 5 sont reliées par l'intermédiaire d'un arbre haute pression, l'ensemble formant un corps haute pression. Le compresseur basse pression 3 et la turbine basse pression 6 sont également couplés en rotation.

Par ailleurs, comme cela est mieux visible à la figure 2, le rotor du compresseur basse pression 3 comporte un arbre 7, le rotor de la turbine basse pression 6 comportant un arbre 8. Ces arbres 7, 8 sont coaxiaux et sont reliés à la soufflante par l'intermédiaire d'un réducteur de vitesse, un réducteur par exemple de type à train épicycloïdal.

La figure 2 illustre plus particulièrement le montage de l'arbre 8 de la turbine basse pression 6 et de l'arbre 7 du compresseur basse pression 2.

L'arbre 7 de compresseur basse pression 3 s'étend radialement à l'extérieur ou autour de l'arbre 8 de turbine basse pression 6.

La surface radialement interne de l'arbre 7 de compresseur basse pression 3, ou arbre externe 7, comporte, dans la zone illustrée à la figure 2 et d'amont vers l'aval, un épaulement radial annulaire 9, une surface tronconique 10 s'évasant vers l'aval, une zone de couplage en rotation comportant des cannelures 11, et une zone cylindrique de centrage 12. Le diamètre de la zone cylindrique 12 est inférieur au diamètre de la zone de couplage en rotation 11, luimême inférieur au plus petit diamètre de la zone tronconique 10.

La surface radialement externe de l'arbre 8 de turbine basse pression 6, ou arbre interne 8, comporte, dans la zone illustrée à la figure 2 et d'amont vers l'aval, une surface tronconique 13 s'évasant vers l'aval coopérant avec la surface tronconique 10 de l'arbre externe 7 par l'intermédiaire d'une cale tronconique 14, une zone de couplage en rotation comportant des cannelures 15 coopérant avec les cannelures 11 de la zone de couplage de l'arbre externe 7, et une zone cylindrique de centrage 16 coopérant avec la zone cylindrique 12 de l'arbre externe 7.

Les cannelures 11, 15 des arbres 7, 8 interne et externe assurent le couplage en rotation desdits arbres 7, 8. Les zones cylindriques 12, 16 des arbres interne et externe 7, 8 ont sensiblement le même diamètre, un jeu minime pouvant être prévu pour assurer le montage au besoin.

La cale tronconique 14 est intercalée radialement entre les surfaces tronconiques 10, 13 des arbres interne et externe 7, 8.

L'angle α des surfaces tronconiques 10, 13 et de la cale 16 par rapport à l'axe X peut être compris entre 1 et 45°.

La forme tronconique des surfaces de centrage 10, 13 et de la cale 14 permet de réaliser un centrage précis de l'arbre interne 8 par rapport à l'arbre externe 7.

Il est possible d'adapter la cale 14 et/ou les surfaces tronconiques correspondantes 10, 13 en fonction des dimensions et du positionnement axial et radial de l'arbre interne 8 par rapport à l'arbre externe 7 de façon à garantir, outre un bon centrage des deux arbres 7, 8 l'un par rapport à l'autre, leur bon positionnement axial l'un par rapport à l'autre. Une telle adaptation peut être obtenue par usinage des surfaces tronconiques 10, 13 des arbres 7, 8 et/ou de la cale 14, ou encore par un choix approprié des dimensions de la cale 14 elle-même.

Une telle structure permet d'améliorer le comportement dynamique de l'ensemble en fonctionnement, de manière à réduire notamment les vibrations.

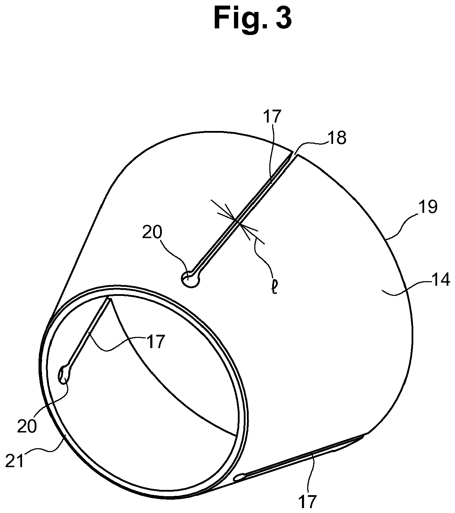

Comme cela est illustré à la figure 3, la cale 14 comporte des fentes 7 s'étendant axialement sur une partie de la dimension axiale de la cale 14. Le nombre de fentes 7 est ici égal à 3 mais peut varier en fonction des besoins.

La présence d'une fente 7 autorise une déformation de la cale 14 de façon à ce qu'elle se conforme à la forme réelle des surfaces tronconiques 10, 13 des arbres 7, 8, dans le cas où la cale 14 ou lesdites surfaces 10, 13 ne sont pas parfaitement tronconiques.

Chaque fente 17 comporte une première extrémité 18 débouchant axialement au niveau de l'extrémité aval 19 de la cale 14 et une seconde extrémité 20 non débouchante, située axialement entre les extrémités axiales 19, 21 de la cale 14.

Chaque fente 17 s'étend sur une dimension axiale comprise entre 50 et 90 % de la dimension axiale de la cale 14.

La seconde extrémité 20 de la fente 17 est arrondie et présente un rayon de courbure supérieure à la moitié de la largeur l ou dimension transversale de la fente 17, la largeur ou la dimension transversale étant prise selon une direction circonférentielle de la cale 14.

La zone arrondie formée au niveau de la seconde extrémité 20 de la fente 17 est plus large que la fente 17, ce qui permet de mieux répartir les contraintes et éviter les effets de concentration de contraintes pouvant mener à des criques ou des départs de fissures au sein de la cale 14. Une telle zone arrondie 20 est également appelée zone de décharge.

Un écrou 22 est vissé sur une partie filetée 23 de l'extrémité amont de l'arbre interne 8. La partie filetée 23 est formée sur la surface radialement interne de l'arbre interne 8. L'extrémité amont 24 de l'écrou 22 s'étend radialement et vient en appui sur l'épaulement radial 9 de l'arbre externe 7.

L'écrou 22 est ainsi conçu pour empêcher le déplacement axial, dans une première direction axiale, ici de l'amont vers l'aval, de l'arbre interne 8 par rapport à l'arbre externe 7. Le déplacement axial de l'arbre interne 8 par rapport à l'arbre externe 7 dans une seconde direction opposée, par exemple de l'aval vers l'amont, peut être empêchée par tous moyens appropriés, par exemple par une butée axiale de l'arbre interne 8 sur l'arbre externe 7.

## Revendications

1. Ensemble pour une turbomachine s'étendant autour d'un axe (X), comportant un arbre radialement interne (8) et un arbre radialement externe (7), lesdits arbres (7, 8) étant coaxiaux et s'étendant selon l'axe (X), des moyens de couplage en rotation (11, 15) des arbres interne et externe (7, 8), des moyens de maintien axial (22) de l'arbre interne (8) par rapport à l'arbre externe (7), des moyens de centrage de l'arbre interne (8) par rapport à l'arbre externe (7), **caractérisé en ce que** les moyens de centrage comportent une cale (14) de centrage radial et de positionnement axial de forme tronconique, intercalée entre une surface de centrage tronconique (13) de l'arbre interne (8) et une surface de centrage tronconique (10) complémentaire de l'arbre externe (7).

2. Ensemble selon la revendication 1, **caractérisé en ce que** les moyens de centrage comportent une surface de centrage cylindrique (16) formée radialement à l'extérieur de l'arbre interne (8), la surface de centrage cylindrique (16) coopérant avec une surface de centrage cylindrique (12) complémentaire formée radialement à l'intérieur de l'arbre externe (7), lesdites surfaces de centrage cylindriques (16, 12) étant décalées axialement par rapport aux surfaces de centrage tronconiques (10, 13).

3. Ensemble selon la revendication 1 ou 2, **caractérisé en ce que** la cale (14) est annulaire.

4. Ensemble selon l'une des revendications 1 à 3, **caractérisé en ce que** la cale (14) comporte au moins une fente (17) s'étendant principalement axialement

5. Ensemble selon l'une des revendications 1 à 4, **caractérisé en ce que** ladite fente (17) comporte une première extrémité (18) débouchant axialement au niveau d'une extrémité axiale (19) de la cale (14) et une seconde extrémité (20) située axialement entre les extrémités axiales (19, 21) de la cale (14).

6. Ensemble selon la revendication 5, **caractérisé en ce que** la seconde extrémité (20) de la fente (17) présente un orifice circulaire ayant un diamètre supérieur à une dimension transversale de la fente.

7. Ensemble selon l'une des revendications 1 à 6, **caractérisé en ce que** les moyens de maintien axial comportent au moins un écrou (22) vissé sur une partie filetée (23) de l'arbre interne (8) ou sur une partie filetée de l'arbre externe (7) et venant axialement en appui sur une surface de butée axiale (9) de l'arbre externe (7) ou respectivement de l'arbre interne (8).

8. Ensemble selon l'une des revendications 1 à 7, **caractérisé en ce que** l'angle des surfaces tronconiques (10, 13) par rapport à l'axe (X) est compris entre 1 et 45°.

9. Ensemble selon l'une des revendications 1 à 8, **caractérisé en ce que** les moyens de couplage en rotation (11, 15) des arbres interne et externe comportent des cannelures.

10. Turbomachine (1) comportant, d'amont en aval par rapport au sens de circulation des gaz au sein de la turbomachine (1), une soufflante (2), un compresseur haute pression (3), un compresseur basse pression (4), une chambre de combustion, une turbine haute pression (5) et une turbine basse pression (6), la turbine basse pression (5) étant couplée en rotation à un premier arbre, la soufflante (2) étant couplée en rotation à un second arbre, **caractérisée en ce qu'**elle comporte un ensemble selon l'une des revendications 1 à 9, et **en ce que** le premier arbre forme l'arbre interne (8) de l'ensemble et le second arbre forme l'arbre externe (7) de l'ensemble, ou inversement.

## Patentansprüche

1. Anordnung für eine Turbomaschine, die sich um eine Achse (X) erstreckt, enthaltend eine radial innere Welle (8) und eine radial äußere Welle (7), wobei die Wellen (7, 8) koaxial verlaufen und sich entlang der Achse (X) erstrecken, Mittel (11, 15) zur Drehkopplung der inneren und der äußeren Welle (7, 8), Mittel (22) zum axialen Halten der inneren Welle (8) in Bezug auf die äußere Welle (7), Mittel zum Zentrieren der inneren Welle (8) in Bezug auf die äußere Welle (7),
**dadurch gekennzeichnet, dass** die Zentriermittel einen kegelstumpfförmigen Keil (14) zur radialen Zentrierung und axialen Positionierung umfassen, der zwischen einer kegelstumpfförmigen Zentrierfläche (13) der inneren Welle (8) und einer komplementär ausgeführten, kegelstumpfförmigen Zentrierfläche (10) der äußeren Welle (7) eingefügt ist.

2. Anordnung nach Anspruch 1,
**dadurch gekennzeichnet, dass** die Zentriermittel eine zylindrische Zentrierfläche (16) umfassen, die radial außerhalb der inneren Welle (8) ausgebildet ist, wobei die zylindrische Zentrierfläche (16) mit einer komplementär ausgeführten, zylindrischen Zentrierfläche (12) zusammenwirkt, die radial innerhalb der äußeren Welle (7) ausgebildet ist, wobei die zylindrischen Zentrierflächen (16, 12) in Bezug auf die kegelstumpfförmigen Zentrierflächen (10, 13) axial versetzt angeordnet sind.

3. Anordnung nach Anspruch 1 oder 2,
**dadurch gekennzeichnet, dass** der Keil (14) ringförmig ist.

4. Anordnung nach einem der Ansprüche 1 bis 3,
**dadurch gekennzeichnet, dass** der Keil (14) zumindest einen sich hauptsächlich axial erstreckenden Schlitz (17) aufweist.

5. Anordnung nach einem der Ansprüche 1 bis 4,
**dadurch gekennzeichnet, dass** der Schlitz (17) ein erstes Ende (18), das axial an einem axialen Ende (19) des Keils (14) mündet, und ein zweites Ende (20), das axial zwischen den axialen Enden (19, 21) des Keils (14) liegt, aufweist.

6. Anordnung nach Anspruch 5,
**dadurch gekennzeichnet, dass** das zweite Ende (20) des Schlitzes (17) eine kreisförmige Öffnung mit einem Durchmesser aufweist, der größer ist als eine Querabmessung des Schlitzes.

7. Anordnung nach einem der Ansprüche 1 bis 6,
**dadurch gekennzeichnet, dass** die axialen Haltemittel zumindest eine Mutter (22) umfassen, die auf einen Gewindeabschnitt (23) der inneren Welle (8) oder auf einen Gewindeabschnitt der äußeren Welle (7) aufgeschraubt ist und axial an einer axialen Anschlagfläche (9) der äußeren Welle (7) bzw. der inneren Welle (8) zur Anlage kommt.

8. Anordnung nach einem der Ansprüche 1 bis 7,
**dadurch gekennzeichnet, dass** der Winkel der kegelstumpfförmigen Flächen (10, 13) bezüglich der Achse (X) zwischen 1 und 45° beträgt.

9. Anordnung nach einem der Ansprüche 1 bis 8,
**dadurch gekennzeichnet, dass** die Mittel (11, 15) zur Drehkopplung der inneren und der äußeren Welle Keilnuten aufweisen.

10. Turbomaschine (1), die von stromaufwärts nach stromabwärts in Bezug auf die Gasströmungsrichtung innerhalb der Turbomaschine (1) ein Gebläse (2), einen Hochdruckverdichter (3), einen Niederdruckverdichter (4), eine Brennkammer, eine Hochdruckturbine (5) und eine Niederdruckturbine (6) umfasst, wobei die Niederdruckturbine (5) drehbar mit einer ersten Welle gekoppelt ist, wobei das Gebläse (2) drehbar mit einer zweiten Welle gekoppelt ist, **dadurch gekennzeichnet, dass** sie eine Anordnung nach einem der Ansprüche 1 bis 9 umfasst und dass die erste Welle die innere Welle (8) der Anordnung bildet und die zweite Welle die äußere Welle (7) der Anordnung bildet, oder umgekehrt.

## Claims

1. An assembly for a turbomachine extending about an axis (X), comprising a radially inner shaft (8) and a radially outer shaft (7), said shafts (7, 8) being coaxial and extending along the axis (X), means (11, 15) for coupling the inner and outer shafts (7, 8) in terms of rotation, means (22) for axially holding the inner shaft (8) with respect to the outer shaft (7) means for centring the inner shaft (8) with respect to the outer shaft (7), **characterised in that** the means of centring comprise a frustoconical radial centring and axial positioning wedge (14) inserted between a frustoconical centring surface (13) of the inner shaft (8) and a complementary frustoconical centring surface (10) of the outer shaft (7).

2. An assembly according to claim 1, **characterised in that** the means of centring comprises a cylindrical centring surface (16) formed radially outwardly of the inner shaft (8), the cylindrical centring surface (16) cooperating with a complementary cylindrical centring surface (12) formed radially inwardly of the outer shaft (7), said cylindrical centring surfaces (16, 12) being axially offset with respect to the frustoconical centring surfaces (10, 13).

3. An assembly according to any of claims 1 or 2, **characterised in that** the wedge (14) is annular.

4. An assembly according to any of claims 1 to 3, **characterised in that** the wedge (14) has at least one mainly axially extending slot (17).

5. An assembly according to one of claims 1 to 4, **characterised in that** said slot (17) comprises a first end (18) opening axially at the level of an axial end (19) of the wedge (14) and a second end (20) situated axially between the axial ends (19, 21) of the wedge (14).

6. An assembly according to claim 5, **characterised in that** the second end (20) of the slot (17) has a circular orifice with a diameter greater than a transverse dimension of the slot.

7. An assembly according to one of claims 1 to 6, **characterised in that** the axial means of retention comprise at least one nut (22) screwed onto a threaded part (23) of the inner shaft (8) or onto a threaded part of the outer shaft (7) and coming to bear axially on an axial end-stop surface (9) of the outer shaft (7) or respectively of the inner shaft (8) .

8. An assembly according to any of claims 1 to 7, **characterised in that** the angle of the frustoconical surfaces (10, 13) with respect to the axis (X) is between 1 and 45°.

9. An assembly according to any of claims 1 to 8, **characterised in that** the angle of the rotational coupling (11, 15) of the inner and outer shafts have splines.

10. A turbomachine (1) comprising, from upstream to downstream with respect to the direction of gas flow within the turbomachine (1), a fan (2), a high-pressure compressor (3), a low-pressure compressor (4), a combustion chamber, a high-pressure turbine (5)and a low-pressure turbine (6), the low-pressure turbine (5) being rotatably coupled to a first shaft, the fan (2) being rotatably coupled to a second shaft, **characterized in that** it comprises an assembly according to one of claims 1 to 9, and **in that** the first shaft forms the inner shaft (8) of the assembly and the second shaft forms the outer shaft (7) of the assembly, or vice versa.
